Europäisches Patentamt

European Patent Office

Office européen des brevets

(11) Veröffentlichungsnummer: **0 371 530**
**A1**

## EUROPÄISCHE PATENTANMELDUNG

(21) Anmeldenummer: **89202809.3**

(22) Anmeldetag: **08.11.89**

(51) Int. Cl.5: **C09C 1/02, C09C 1/00**

(30) Priorität: **27.11.88 DE 3840039**

(43) Veröffentlichungstag der Anmeldung:
**06.06.90 Patentblatt 90/23**

(84) Benannte Vertragsstaaten:
**AT BE CH DE ES FR GB GR IT LI LU NL SE**

(71) Anmelder: **METALLGESELLSCHAFT Aktiengesellschaft**
**Reuterweg 14**
**D-6000 Frankfurt am Main(DE)**

(72) Erfinder: **Röhrborn, Hans-Joachim, Dr.**
**Terniepenweg 88**
**D-4133 Neukirchen-Vluyn(DE)**
Erfinder: **Aderhold, Clemens, Dr.**
**Josef-Brocker-Dyk 143**
**D-4150 Krefeld 1(DE)**

(54) Verfahren zur Herstellung von chemoreaktivem Bariumsulfat unterschiedlicher Morphologie.

(57) Bei einem Verfahren zur Herstellung von chemoreaktivem Bariumsulfat durch Copräzipitation, nach Patentanmeldung P 37 18 277.3, wird zwecks Gewinnung eines chemoreaktiven Bariumsulfats gewünschter Morphologie die Ausfällung im wentlichen auf in wäßrigem Medium suspendierten, morphologisch vorgebildetem, feinteiligen anorganischem oder organischem Trägermaterial vorgenommen und dem chemoreaktiven Copräzipitat die Morphologie des vorgebildeten Trägermaterials aufgeprägt. Das Trägermaterial wird mit einem mittleren Äquivalentradius von 0,1 bis 200, vorzugsweise von 0,5 bis 5 μ eingesetzt.

EP 0 371 530 A1

# Verfahren zur Herstellung von chemoreaktivem Bariumsulfat unterschiedlicher Morphologie

Die Erfindung betrifft ein Verfahren zur Herstellung von gefälltem chemoreaktiven Bariumsulfat unterschiedlicher Morphologie.

Charakteristisch für alle sogenannten aktiven Füllstoffe wie Silikate, Oxide, Ruß, Schwefel, ist eine Oberflächenreaktivität aufgrund von veresterbaren Hydroxylgruppen, reduzierbaren Carbonyl- bzw. Carboxylgruppen oder radikalisch spaltbaren Molekülketten (Polysulfide).

Diese Oberflächenreaktivität fehlt am Bariumsulfat. Das Zentralatom im $(SO_4)^{2-}$-Tetraeder liegt in der höchsten Oxidationsstufe vor. Die hohe Ladungsdichte des $Ba^{2+}$-Ions gewährleistet seine Absättigung an der Kristalloberfläche.

Eine bekannte Maßnahme, die Nachbehandlung mit anorganischen und/oder organischen Hilfsstoffen, wie die Silanisierung, führt beim Bariumsulfat nicht zum gewünschten Erfolg, weil im Gegensatz zu den oxidischen Pigmenten, wie $TiO_2$, $ZnO$ und $SiO_2$, bzw. zum Kohlenstoff auf der Oberfläche des $BaSO_4$-Korns keine veresterbaren bzw. komplexierbaren Oberflächenzentren vorhanden sind und eine Fixierung der Nachbehandlungskomponenten im Sinne einer kovalenten Bindung nicht stattfinden kann.

Aus EP-PS 142 695 ist ein Verfahren zur Herstellung eines schuppenförmigen Pigments bekannt, wobei in einer wäßrigen Suspension eines schuppenförmigen Substrats Bariumsulfat ausgefällt und das beschichtete Pigment abgetrennt und weiterbehandelt wird. Das Pigment wird in der Kosmetik wegen seiner besonderen Haft- und Ausbreiteigenschaften auf der Haut verwendet.

In der Patentanmeldung P 37 18 277.3 wird ein Verfahren zur Herstellung von Bariumsulfat mit chemoreaktiver Oberfläche beschrieben. In diesem Fällverfahren von Bariumionen mit Sulfationen in wäßrigem Medium wird die Ausfällung (Copräzipitation) des Bariumsulfats in Gegenwart von zusätzlichen, mit Bariumionen präzipitierbare und schwerlösliche Bariumverbindungen bildenden Anionen wasserlöslicher Verbindungen durchgeführt. In Abhängigkeit von der Konzentration der zugegebenen Fremddionen wird ein Produkt erhalten, das die Fremddionen entweder homogen über den Kristall verteilt enthält oder diese an der Oberfläche angereichert enthält.

Dieses Verfahren befriedigt in der technischen Praxis noch nicht in allen Fällen, weil entsprechend dem Kristallwachstum des Bariumsulfates sich die Morphologie des erhaltenen Fällproduktes (Copräzipitat) stets einstellt und praktisch nur Materialien hoher Dichte ($\rho \sim 4{,}48$ g/cm³) erhalten werden.

Es wurde nun gefunden, daß chemoreaktives Bariumsulfat beliebiger Morphologie sowie ggf. mit einer niedrigeren spezifischen Dichte des Produktes hergestellt werden kann, wenn bei dem Fällungsprozeß des Copräzipitates für die Anwesenheit geeigneter Trägermaterialien in dem wäßrigen Reaktionsmedium Sorge getragen wird.

Demgemäß wird das Verfahren zur Herstellung von Bariumsulfat mit chemoreaktiver Oberfläche durch Fällung von Bariumionen mittels Sulfationen in wäßrigem Medium, wobei die Ausfällung (Copräzipitation) in Gegenwart von zusätzlichen, mit Bariumionen präzipitierbare und schwerlösliche Bariumverbindungen bildenden Anionen wasserlöslicher Verbindungen durchgeführt wird nach Patentanmeldung P 37 18 277.3, gemäß der Erfindung verbessert und in solcher Weise ausgestaltet, daß die Ausfällung im wesentlichen auf in wäßrigem Medium suspendierten morphologisch vorgebildetem, feinteiligen anorganischem oder organischem Trägermaterial vorgenommen und dem chemoreaktiven Copräzipitat die Morphologie des vorgebildeten Trägermaterials aufgeprägt wird.

Die im Verfahren der Erfindung eingesetzten Trägermaterialteilchen unterschiedlichster vorgebildeter Morphologie können Kristalle, kugel-, würfel-, plättchen- oder faserförmige Teilchen sein.

Als feinteiliges Trägermaterial bestimmter Morphologie eignen sich natürliche oder synthetische anorganische Stoffe oder feinteilige synthetische Polymere wie Polyester, Polyamid, zweckmäßig als Fasern. Geeignete natürliche oder synthetische anorganische Stoffe sind beispielsweise aufbereitete natürliche Mineralien wie Quarzmehl, Schwerspat, Ton, Schichtsilikate, Kreide; oder synthetische anorganische Stoffe wie gefälltes Barium- oder Calciumsulfat, Calciumcarbonat, Flugasche, Siliciumdioxid, aus Glasschmelzen gewonnene Fasern oder Microperlen, Kohlenstoffasern, Graphit. Natürliches oder gefälltes feinkristallines Bariumsulfat stellt ein bevorzugtes Trägermaterial dar.

Die feinteiligen Trägermaterialien werden mit einem mittleren Äquivalentradius von 0,1 bis 200 $\mu$m eingesetzt. Bevorzugt werden Äquivalentradien von 0,1 bis 100 $\mu$m eingesetzt und insbesondere eignen sich mittlere Äquivalentradien von 0,5 bis 5 $\mu$m.

Zur Durchführung des Verfahrens der Erfindung werden die feinteiligen Trägermaterialien zweckmäßig in der wäßrigen Lösung suspendiert, welche die Sulfationen und die weiteren anionischen Fremddionen enthält, die im Copräzipitat mit Bariumionen weitere schwerlösliche Bariumverbindungen bilden. Diese Suspension stellt quasi die eine Reaktionskomponente dar, während die andere Reaktionskomponente von der wäßrigen Lösung eines Bariumsalzes, wie Bariumchlorid gebildet wird. Diese Reaktionskomponenten (Lösungen und/oder Suspensionen) können in an sich bekannter Weise zusammengeführt werden. Je nach der gewünschten Feinheit der ausgefällten Beschichtung mit chemoreaktivem Bariumsulfat bzw. der erforderlichen Schichtdicke werden die Lösungen bzw. Suspensionen in einer Fällungs-Vorrichtung oder in einer Zerstäubungseinrichtung zusammengeführt. Dabei erfolgt die Ausfällung eines Copräzipitats auf den suspendierten Trägermaterialien und das Copräzipitat wächst bei dieser Verfahrensweise epitaktisch auf den vorgebildeten Teilchen bestimmter Morphologie und unterschiedlichster chemischer Zusammensetzung auf wie Bariumsulfat, Calciumcarbonat, Aluminiumsilikat, Graphit.

In dem Verfahren der Erfindung werden als Anionen wasserlöslicher organischer bzw. anorganischer Verbindungen die gleichen Verbindungen wie auch im Verfahren der Patentanmeldung P 37 18 277.3 verwendet.

Diese zusätzlichen anionischen Komponenten werden zweckmäßig der wäßrigen Lösung zugesetzt, welche die anorganische Sulfatkomponente, wie Alkalisulfat, enthält. Die zusätzliche anionische Komponente wird in einer Menge von 0,1 bis 50, vorzugsweise 1 bis 10 Gew.-%, bezogen auf aufgefälltes Bariumsulfat, verwendet.

Geeignete organische wasserlösliche Verbindungen der Erfindung sind Verbindungen aus der Gruppe Alkyl- und Arylsulfonate, Alkyl- und Arylsulfate oder Alkyl- und Arylphosphorsäureester, wobei der Alkyl- oder Arylrest ggf. durch funktionelle Gruppen teilweise substituiert sein kann, oder perfluorierte Alkyl- und Arylsulfonate. Beispielsweise werden in dem Verfahren der Erfindung eingesetzt:
Natriumdodecylbenzolsulfonat
Natriumlaurylsulfat
Natriumcetylsulfat
Phosphorsäuremonoethylmonobenzylester
Lithiumperfluoroctansulfonat.

Als Verbindungen, die mit funktionellen Gruppen substituierte Alkyl- oder Arylreste tragen, eignen sich solche mit Halogen, Hydroxyl-, Amino- Imino- Epoxi- oder Mercapto-Gruppen oder einer endständigen Doppelbindung, beispielsweise
12-Brom-1-dodecansulfonsäure
Natrium-10-hydroxy-1-decansulfonat
Natrium-Carrageenan
Natrium-10-Mercapto-1-Cetansulfonat
Natrium-16-Ceten(1)sulfat.

Als Anionen wasserlöslicher anorganischer Verbindungen (andere anorganische Verbindungen als Sulfate) werden anorganische Verbindungen aus der Gruppe Thiosulfat, Silikat, Fluorid, Fluorsilikat, Monofluorphosphat oder Wolframat eingesetzt. Geeignete Verbindungen sind beispielsweise
Natriumthiosulfat ($Na_2S_2O_3$ . 5 $H_2O$)

Natriumsilikat ($Na_2SiO_3$),
Natriumfluorid (NaF)
Lithiumhexafluorosilikat ($Li_2(SiF_6)$ . 2 $H_2O$)
Natriumfluorophosphat ($Na_2PO_3F$)
Natriumpolywolframat (3 $Na_2WO_4$ . 9 $WO_3$ . $H_2O$).

Die nach dem erfindungsgemäßen Verfahren hergestellten, auf vorgelegten Trägermaterialien bestimmter Morphologie aufgewachsenen chemoreaktiven Bariumsulfate können eine für den vorgesehenen Verwendungszweck geeignete Nachbehandlung erfahren.

Sind der Bariumsulfatbeschichtung z.B. durch die Dotierungskomponenten saure bzw. veresterbare Hydroxylgruppen, wie - $\overset{|}{\underset{|}{S}}$i-OH, O = $\overset{|}{\underset{|}{P}}$ -OH oder - $\overset{|}{\underset{|}{T}}$ i-OH, aufgeprägt oder befinden sich in der Kristallitoberfläche neben den $(SO_4)^{2-}$-Anionen durch Copräzipitation eingebrachte, andere chemisch umsetzbare Gruppen, wie $S^{2-}$, $SH^-$ oder $F^-$, so kann diese $BaSO_4$-Schicht mit geeigneten Nachbehandlungskomponenten bzw. Kupplungsmitteln für das jeweilige Einsatzgebiet ausgerüstet werden. Ein im allgemeinen eingesetzter Haftvermittler bzw. Kupplungsmittel sind organofunktionelle Alkoxysilane, wie Vinyltrimethoxysilan.

Es werden aber auch Alkoxytitanate, -zirkonate oder -aluminate eingesetzt. Das Aufbringen des Haftvermittlers erfolgt auf an sich bekannte Weise. Er kann in einem Lösungsmittel gelöst auf das Pigment aufgebracht werden, wobei das Lösungsmittel abgezogen und der Feststoff getrocknet wird. Oder die Belegung erfolgt bei flüssigen Haftvermittlern durch Verdüsen des Mittels auf das im Mischbett bewegte Pigmentpulver.

Dem nach dem Verfahren der Erfindung hergestellten chemoreaktiven Bariumsulfat-Pigment wird sowohl eine bestimmte Morphologie als auch eine definierte Funktionalität aufgeprägt, die eine kovalente Wechselwirkung zwischen dem Pigment und z.B. der Polymermatrix eines Reaktivharzes bzw. von thermoplastischen Polymeren herzustellen vermag. Beispielsweise wird auch die Kristallisationsgeschwindigkeit teilkristallierter Thermoplaste erhöht. Durch Einbindung des nach dem Verfahren der Erfindung hergestellten chemoreaktiven Bariumsulfat-Pigments in ein thermoplastisches Polymer oder organisches System werden diesem im Sinne eines Verbundwerkstoffes definierte mechanische, optische und thermische Festkörpereigenschaften erteilt.

Das nach dem Verfahren der Erfindung hergestellte chemoreaktive Bariumsulfat-Pigment unterschiedlicher Morphologie wird beispielsweise als aktive disperse Festkörperkomponente in natürlichen oder synthetischen Elastomeren, thermoplastischen und duroplastischen Kunststoffen und keramischen Massen verwendet.

Die Vorteile des Verfahrens der Erfindung sind darin zu sehen, daß durch die fest haftende Ausfällung von chemoreaktivem Bariumsulfat auf eine Vielzahl von Trägermaterilaien praktisch jede gewünschte Morphologie eines Bariumsulfat-Kompositionspigmentes erhalten werden kann. Dabei wird in besonders wirtschaftlicher Weise die chemoreaktive $BaSO_4$-Beschichtung nur als dünne fixierte Hülle auf den vorgelegten Trägerteilchen aufgebracht. Dadurch können mit Trägermaterialien von geringem spezifischen Gewicht auch chemoreaktive Bariumsulfat-Pigmente mit kleinerer Dichte - bezogen auf ein massives Pigment mit chemoreaktiver Oberfläche -erhalten werden.

Die Erfindung wird anhand der nachstehenden Beispiele näher und beispielhaft erläutert.

Beispiel 1

In einem Rührgefäß wurden 500 g aufbereiteter natürlicher Schwerspat in 1000 ml $Na_2SO_4$-Lösung mit der Konzentration 35,9 g/l bei Raumtemperatur suspendiert. In die sanft gerührte Schwerspatsuspension wurden 8 g Na-laurylsulfat eingetragen und gelöst. Dieser Ansatz wurde unter stetigem Rühren in einer Fällzelle mit $BaCl_2$-Lösung (50 g/l) zur Reaktion gebracht. Es wurden neben dem Schwerspat und dem Na-laurylsulfat 0,050 mol/min $Na_2SO_4$ und 0,046 mol/min $BaCl_2$ durchgesetzt. Bezogen auf 100 g vorgelegten natürlichen Schwerspat wurden somit 10,4 g $BaSO_4$ mit chemoreaktiver Oberfläche gebildet und aufgefällt. Das angefallene Produkt wurde filtriert, mehrmals mit Wasser gewaschen bis zu einer Leitfähigkeit der Suspension von 100 $\mu$S/cm und sodann bei 110°C getrocknet. Die Kohlenstoffbestimmung des trockenen Produktes ergab einen Kohlenstoffgehalt von 0,57 %.

Das Kompositionsprodukt (Gewichtsverhältnis, natürlicher Schwerspat zu $BaSO_4$ mit chemoreaktiver Oberfläche, 9,5:1) unterscheidet sich in seinen Eigenschaften signifikant vom vorgelegten Schwerspat. Der beschichtete Schwerspat wird von netzmittelfreiem Wasser nicht mehr benetzt.

Beispiel 2

In einem Rührgefäß wurden 250 g plättchenförmiges Talkum in 1000 ml $NaSO_4$-Lösung mit der Konzentration von 35 g/l unter Zusatz von 50 ml Methanol bei Raumtemperatur suspendiert. Die Suspension wurde mit 7 g NaOH alkalisch eingestellt und mit 18,6 g $Na_2SiO_3$-Lösung (Dichte 1,346 g/cm³) versetzt. Dieser Ansatz wurde unter stetigem Rühren in einer Fällapparatur mit einer $BaCl_2$-Lösung der Konzentration 50 g/l zur Reaktion gebracht. Es wurden neben dem Talkum und dem $Na_2SiO_3$ 0,050 mol/min $Na_2SO_4$ und 0,045 mol/min

$BaCl_2$ durchgesetzt. Bezogen auf 100 g vorgelegtes Talkum wurden somit 21 g $BaSO_4$ mit chemoreakiver Oberfläche gebildet und ausgefällt. Das angefallene Produkt wurde filtriert, mehrmals mit Wasser gewaschen bis zu einer Leitfähigkeit der Suspension von 100 $\mu$S/cm und sodann bei 110°C getrocknet. Die naßchemische Analyse des Produktes ergab einen gegenüber dem vorgelegten Talkum um 0,84 % erhöhten $SiO_2$-Gehalt.

Das sehr helle oberflächenreaktive Kompositionsprodukt läßt sich gleichermaßen problemlos in Polymerschmelzen einarbeiten wie das üblicherweise eingesetzte Talkum, steigert aber deutlich die Kristallisationsgeschwindigkeit von teilkristallinen Thermoplasten im Vergleich zum reinen Talkum.

Beispiel 3

In einem Rührgefäß wurden 500 g gefälltes $BaSO_4$ mit würfelförmiger Morphologie und einem mittleren Äquivalenzdurchmesser von 8,8 $\mu$m in 1000 ml $Na_2SO_4$-Lösung mit der Konzentration 35,9 g/l bei Raumtemperatur suspendiert. Die stetig gerührte Suspension wurde mit 7 g NaOH alkalisch eingestellt und mit 18,6 g $Na_2SiO_3$-Lösung (Dichte 1,346 g/cm³) versetzt. Der Ansatz wurde unter Rühren in einer Fällapparatur mit einer $BaCl_2$-Lösung der Konzentration 50 g/l zur Reaktion gebracht. Es wurden neben dem vorgelegten $BaSO_4$ und dem $Na_2SiO_3$ 0,050 mol/min $Na_2SO_4$ und 0,045 mol/min $BaCl_2$ durchgesetzt. Bezogen auf 100 g vorgelegtes kristallines würfelförmiges $BaSO_4$ wurden somit 10,1 g $BaSO_4$ mit chemoreaktiver Oberfläche gebildet und aufgefällt. Das angefallene Kompositionsprodukt wurde filtriert, mehrmals mit Wasser gewaschen bis zu einer Leitfähigkeit der Suspension von 100 $\mu$s/cm und sodann bei 110°C getrocknet. Die Belegung des würfelförmigen Trägermaterials kann elektronenmikroskopisch sichtbar gemacht werden.

Beispiel 4

Aus dem gemäß Beispiel 3 - durch Auffällung silikatisch -modifizierten Bariumsulfat mit würfelförmiger Morphologie wurde mit wasserfreiem Isopropanol eine Dispersion mit einem Feststoffgehalt von 10 Gew.-% hergestellt. Unter stetigem Rühren wurde eine 1%ige Lösung von Vinyltrimethoxysilan in wasserfreiem Isopropanol zugetropft, so daß in der Mischung bei Reaktionsende 0,08 Gew.-% des Silans bezogen auf das Produkt aus Beispiel 3 vorlagen. Die Dispersion wurde ca. 1 Stunde bei 40°C gerührt und dann abfiltriert. Das physisorptiv gebundene Silan wurde mit wasserfreiem Isopropanol ausgewaschen und das Produkt getrocknet.

Es fiel ein Pigment an, auf dem IR-spektroskopisch die Vinylgruppierungen nachgewiesen werden konnten.

## Ansprüche

1. Verfahren zur Herstellung von chemoreaktivem Bariumsulfat durch Fällung von Bariumionen mittels Sulfationen in wäßrigem Medium, wobei die Ausfällung (Copräzipitation) in Gegenwart von zusätzlichen, mit Bariumionen präzipitierbare und schwerlösliche Bariumverbindungen bildenden Anionen wasserlöslicher Verbindungen durchgeführt wird nach Patentanmeldung P 37 18 277.3, dadurch gekennzeichnet, daß die Ausfällung im wesentlichen auf in wäßrigem Medium suspendierten, morphologisch vorgebildetem, feinteiligen anorganischem oder organischem Trägermaterial vorgenommen und dem chemoreaktiven Copräzipitat die Morphologie des vorgebildeten Trägermaterials aufgeprägt wird.

2. Verfahren nach Anspruch 1, dadurch gekennzeichnet, daß als Trägermaterial natürliche oder synthetische anorganische Stoffe oder feinteilige synthetische polare Polymere eingesetzt werden.

3. Verfahren nach den Ansprüchen 1 bis 2, dadurch gekennzeichnet, daß ein Trägermaterial mit einem mittleren Äquivalentradius von 0,1 bis 200, vorzugsweise von 0,5 bis 5 $\mu$m eingesetzt wird.

4. Verfahren nach den Ansprüchen 1 bis 3, dadurch gekennzeichnet, daß Anionen wasserlöslicher organischer Verbindungen eingesetzt werden.

5. Verfahren nach den Ansprüchen 1 bis 4, dadurch gekennzeichnet, daß organische Verbindungen aus der Gruppe Alkyl- und Arylsulfonate, Alkyl- und Arylsulfate oder Alkyl- und Arylphosphorsäureester, wobei der Alkyl- oder Arylrest ggf. durch funktionelle Gruppen teilweise substituiert sein kann, oder perfluorierte Alkyl- und Arylsulfonate eingesetzt werden.

6. Verfahren nach den Ansprüchen 1 bis 3, dadurch gekennzeichnet, daß Anionen wasserlöslicher anorganischer Verbindungen eingesetzt werden.

7. Verfahren nach den Ansprüchen 1 bis 3 und 6, dadurch gekennzeichnet, daß anorganische Verbindungen aus der Gruppe Silikat, Fluorid, Fluorsilikat, Monofluorphosphat oder Wolframat eingesetzt werden.

8. Verfahren nach den Ansprüchen 1 bis 7, dadurch gekennzeichnet, daß die Komponente, die eine zusätzliche schwerlösliche Bariumverbindung bildet, der verwendeten Sulfationenlösung zugesetzt wird.

9. Verfahren nach den Ansprüchen 1 bis 8, dadurch gekennzeichnet, daß die Komponente, die eine zusätzliche schwerlösliche Bariumverbindung bildet, in einer Menge von 0,1 bis 50, vorzugsweise 1 bis 10 Gew.%, bezogen auf aufgefälltes Bariumsulfat, eingesetzt wird.

10. Verfahren nach den Ansprüchen 1 bis 9, dadurch gekennzeichnet, daß das mit dem chemoreaktiven Copräzipitat beschichtete Trägermaterial abgetrennt, getrocknet und mit einem funktionellen Silanderivat oder funktionellen Siloxan nachbehandelt wird.

11. Verwendung des nach dem Verfahren der Ansprüche 1 bis 10 hergestellten, mit chemoreaktivem Bariumsulfat unterschiedlicher Morphologie beschichtetem Trägermaterial als aktive feindisperse Festkörperkomponente in natürlichen oder synthetischen Elastomeren, thermoplastischen und duroplastischen Kunststoffen und keramischen Massen.

12. Kompositionspigment aus mit Bariumsulfat beschichtetem Substrat, dadurch gekennzeichnet, daß das abgeschiedene Bariumsulfat chemoreaktiv ist und die Morphologie des Trägermaterials aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-11752 (BASF) --- | | C09C1/02 C09C1/00 |
| A | GB-A-960639 (GEORGIA KAOLIN CO.) . --- | | |
| A | FR-A-1382534 (ASSOCIATED CHEMICAL CO.) --- | | |
| A | GB-A-466216 (LAPORTE) --- | | |
| A | US-A-2081835 (J. B. PIERCE) --- | | |
| A | DE-A-1717096 (BAYER) --- | | |
| A | CHEMICAL ABSTRACTS, vol. 106, no. 4, 26 Januar 1987 Columbus, Ohio, USA Seite 77; rechte Spalte; ref. no. 20070H &JP-A-61123673(TOYOTA MOTOR CO.)(11.06.1986) * Zusammenfassung * --- | | |
| A | CHEMICAL ABSTRACTS, vol. 100, no. 16, 16 April 1984 Columbus, Ohio, USA Seite 87; linke Spalte; ref. no. 122840C &JP-A-58120520(SAKAI CHEMICAL INDUSTRY CO.) (18.07.1983) * Zusammenfassung * --- | | **RECHERCHIERTE SACHGEBIETE (Int. Cl.5)** C09C C09D |
| A | WORLD SURFACE COATINGS ABSTRACTS. vol. 59, no. 523, Januar 1986, OXFORD GB Seite 6; ref.no.86/00026; &JP-A-85028766(ONAHAMA SAKAI KAGAKU) ----- | | |

Der vorliegende Recherchenbericht wurde für alle Patentansprüche erstellt

| Recherchenort | Abschlußdatum der Recherche | Prüfer |
|---|---|---|
| DEN HAAG | 08 FEBRUAR 1990 | VAN BELLINGEN I. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

..............................................................
& : Mitglied der gleichen Patentfamilie, übereinstimmendes Dokument